# DEMANDE DE BREVET EUROPEEN

(11) **EP 0 599 411 A1**
(43) Date de publication de la demande: **01.06.1994**
(21) Numéro de dépôt: 93203234.5
(22) Date de dépôt: 18.11.1993
(51) Int. Cl.: G06K 11/18, G06K 11/16

(54) **Dispositif à commande tactile et clavier**

(30) Priorité: 25.11.1992 FR 9214188
(71) Demandeur: LABORATOIRES D'ELECTRONIQUE PHILIPS S.A.S., 94450 Limeil-Brévannes (FR); Philips Electronics N.V., 5621 BA Eindhoven (NL)
(72) Inventeur: Polaert, Rémy, F-75008 Paris (FR); Maniguet, François, F-75008 Paris (FR)
(74) Mandataire: Landousy, Christian

(57) **Abrégé**

Dispositif à commande tactile comprenant une plaque (10) dans laquelle est découpée partiellement (12) au moins une partie (14) de sorte qu'elle puisse être inclinée autour d'au moins une attache restante (15).

Des jauges de contrainte (17) permettent de mesurer l'intensité d'une force appliquée (F) sur ladite partie (14). Application à la commande de divers appareils tels que téléviseurs ou autres.

Application : télécommandes d'appareil, clavier.

## Description

L'invention concerne un dispositif à commande tactile comprenant une plaque apte à recevoir une force appliquée, au moins une fente qui enveloppe une partie découpée partiellement dans la plaque en conservant une attache avec une partie restante de la plaque, des détecteurs à jauge de contrainte pour délivrer des signaux de mesure des déformations de la plaque.

Un tel dispositif sert à un utilisateur à fournir des commandes à un appareillage récepteur de commandes.

L'invention concerne également un clavier mettant en oeuvre une pluralité de dispositifs à commande tactile.

On connaît le document US 4.550.384 qui décrit un appareil pour délivrer les coordonnées du point d'application d'une force sur une surface. Pour cela, la surface est munie de quatre fentes rectilignes disposées aux quatre coins d'une plaque, les fentes découpant la plaque parallèlement à chaque côté en dégageant des languettes. Celles-ci peuvent également être disposées vers le milieu des côtés de la plaque.

La plaque est montée sur un cadre en solidarisant avec le cadre les extrémités découpées des languettes. Le point d'application de la force est alors constitué par la partie de plaque extérieure aux languettes. Les languettes sont munies de jauges de contrainte.

A l'aide de signaux de mesure délivrés par l'ensemble des jauges de contrainte, on peut calculer les coordonnées du point d'application de la force qui provoque les déformations des languettes.

Un tel dispositif est adapté au calcul des coordonnées d'un point d'application et nécessite de traiter collectivement des signaux de mesures issus de plusieurs jauges de contrainte réparties judicieusement sur la surface de la plaque, sans tenir compte de l'intensité de la force appliquée. Seul son point d'application est considéré.

Le but de l'invention est de pouvoir disposer d'une ou plusieurs commandes différentes dépendantes de l'intensité de la force appliquée et actionnées tactilement par l'utilisateur. Pour commander des appareillages à grande diffusion, il est souhaitable que ces commandes aient un coût faible.

Ce but est atteint à l'aide d'un dispositif, tel que décrit dans le premier paragraphe, qui comprend des moyens pour maintenir ladite partie restante et pour laisser la partie découpée libre pour recevoir une application de la force F et permettre ainsi une inclinaison de celle-ci autour de l'attache, lesdits signaux de mesure variant en fonction de l'inclinaison de ladite partie découpée par rapport à la partie restante.

Le dispositif est ainsi très simple à utiliser et à fabriquer. On dispose d'une commande qui délivre un signal électrique proportionnel ou fonction de la force appliquée. Son coût est réduit. Il n'y a pas de pièce subissant de frottement mécanique.

A partir de cette structure simple, on peut soit répéter la même structure, soit pratiquer d'autres fentes dans les parties découpées et réaliser des dispositifs ayant des possibilités de commandes accrues. On peut ainsi construire des claviers.

Ainsi le dispositif peut comprendre au moins deux fentes qui enveloppent partiellement respectivement deux parties découpées en conservant une attache commune aux deux dites parties découpées et aux parties restantes, l'attache commune formant un axe d'inclinaison commun. En tenant compte de la polarité du signal de mesure délivré par les jauges, on dispose ainsi de deux commandes avec une seule jauge.

Egalement, au moins une partie découpée peut elle-même être munie d'au moins une fente additionnelle qui enveloppe partiellement respectivement une partie découpée additionnelle en conservant une attache additionnelle avec une partie restante additionnelle de ladite partie découpée, l'attache additionnelle formant un axe de basculement additionnel pour ladite partie découpée additionnelle.

Une telle disposition peut permettre de combiner une commande avec une autre commande.

Lorsque le dispositif dispose de deux parties découpées à l'aide de deux fentes, de sorte qu'il subsiste une attache commune formant un axe commun, il est possible que les deux parties découpées servent à leur tour collectivement de support pour réaliser deux fentes additionnelles dégageant deux parties découpées additionnelles ayant une attache commune additionnelle. Celle-ci constitue alors un autre axe de basculement pour les parties découpées additionnelles. Les deux axes sont préférentiellement perpendiculaires. Le dispositif constitue alors un montage du type cardan.

Ces différents aspects de l'invention et d'autres encore seront apparents et élucidés à partir des modes de réalisation décrits ci-après.

L'invention sera mieux comprise à l'aide des figures suivantes données à titre d'exemples non limitatifs qui représentent :
Figure 1 : une vue en perspective d'un dispositif à une fente selon l'invention.
Figures 2, 3 : deux schémas représentant un dispositif à deux fentes ayant respectivement un et deux axes d'inclinaison.
Figure 4 : un schéma représentant un dispositif à trois fentes avec deux axes d'inclinaison.
Figure 5 : un schéma représentant un dispositif à quatre fentes avec deux axes d'inclinaison perpendiculaires.
Figure 6 : un schéma d'un dispositif avec la plaque reposant sur un pivot.
Figure 7 : un schéma d'un dispositif avec la plaque munie d'un poussoir.
Figures 8, 9 : deux schémas représentant deux dispositions d'un pont résistif à jauge de contrainte disposé soit d'un côté soit de part et d'autre des fentes.
Figure 10 : un schéma électrique d'un circuit de commande à liaison par fil.
Figure 11 : un schéma de principe d'une télécommande à liaison sans fil.
Figure 12 : un schéma d'un clavier formé d'une pluralité de dispositifs à une fente.

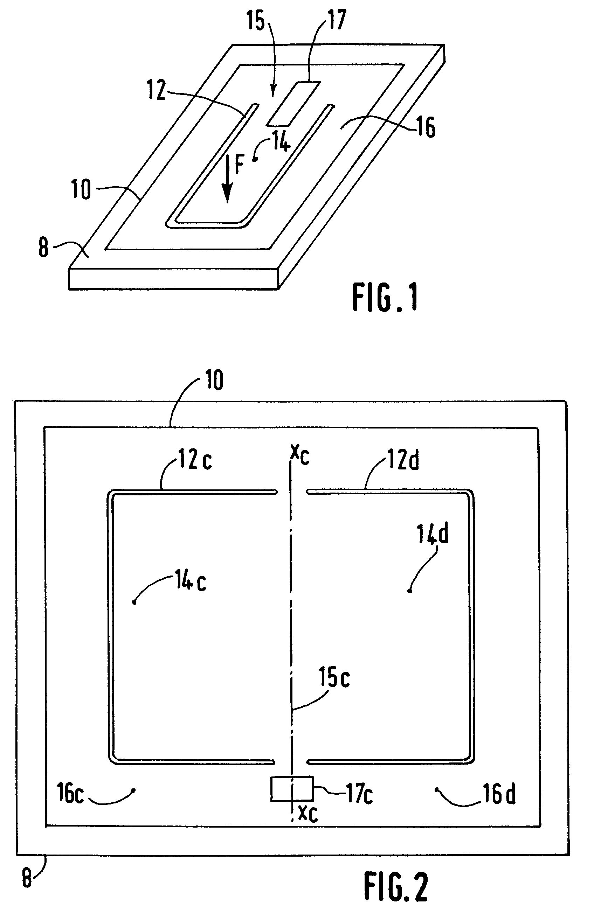

La figure 1 représente un cadre 8 sur lequel est fixée une plaque 10 formée d'un matériau apte à recevoir des jauges résistives et ayant une souplesse requise, par exemple une plaque de circuit imprimé. Dans la plaque, on découpe une partie découpée 14 à l'aide d'une fente 12 qui enveloppe presque en totalité la partie découpée 14. Celle-ci a une forme de U sur la figure 1. La forme de la partie découpée peut être quelconque. La fente ne se fermant pas sur elle-même, il subsiste une attache 15 qui sert d'axe d'inclinaison pour la partie découpée 14. La partie de plaque qui ne contient pas la partie découpée 14 constitue la partie restante 16. Celle-ci étant maintenue au cadre 8, lorsqu'une force F est appliquée sur la partie découpée 14 cette dernière s'incline autour de l'attache 15.

Un pont résistif 17 à jauge de contrainte est disposé aux environs de l'attache 15, c'est-à-dire dans une zone où apparaissent des déformations importantes. Le pont de jauge peut donc être situé soit sur la plaque découpée soit sur la partie restante soit à cheval sur les deux parties. Les jauges de contrainte délivrent des signaux de mesures qui sont proportionnels à (ou plus généralement fonction de) l'inclinaison de la partie découpée donc à l'intensité de la force appliquée. Ces signaux de mesures sont utilisés comme signaux de commande pour commander d'autres appareils.

On peut doubler la capacité de commande en utilisant un seul pont à jauge de contrainte disposé sur une attache commune à deux parties découpées partiellement à l'aide de deux fentes placées tête-bêche. La figure 2 représente deux fentes 12c, 12d en forme de U qui sont disposées de sorte que leurs attaches respectives se confondent en l'attache 15c. Les deux parties découpées 14c, 14d peuvent être inclinées conjointement (axe Xc - Xc) par une force appliquée sur l'une ou l'autre partie découpée. Une seule jauge de contrainte 17c est disposée au voisinage du lieu où les parties découpées 14c, 14d et les parties restantes 16c, 16d se rencontrent. La polarité du signal de mesure délivré par la jauge 17c permet de différencier une action opérée sur l'une ou l'autre partie découpée. Cette disposition peut permettre par exemple de réaliser respectivement la croissance et la décroissance d'un signal de commande.

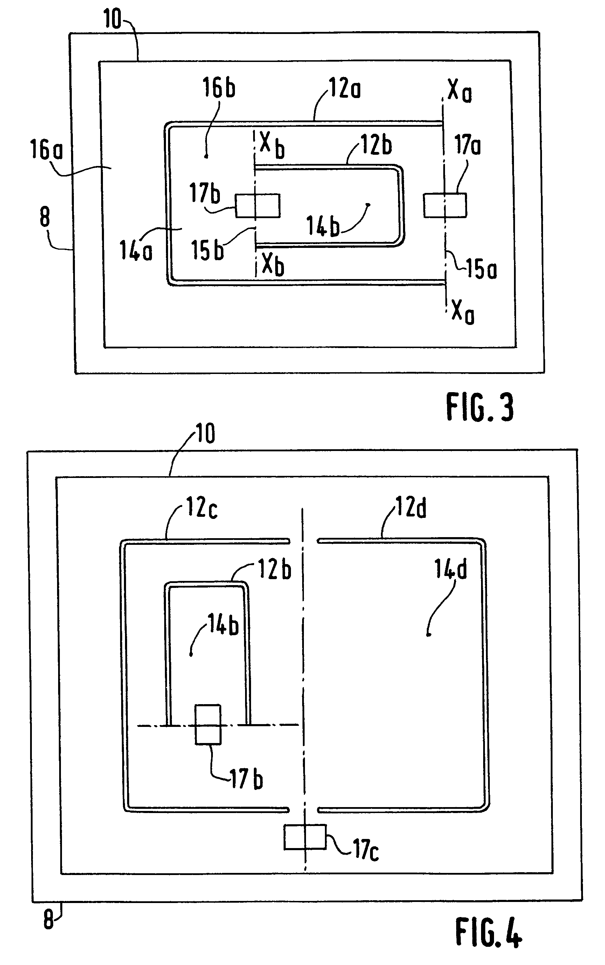

Les deux fentes peuvent, selon un autre mode de réalisation, être disposées sur la plaque de sorte que l'une enveloppe, au moins partiellement, l'autre fente. La figure 3 représente un schéma d'une telle disposition dans lequel les deux axes d'inclinaison Xa - Xa et Xb - Xb sont distincts. Une partie découpée 14b est découpée à l'intérieur de la partie découpée 14a. Il est alors nécessaire d'utiliser deux jauges de contrainte 17a, 17b. Cette disposition présente l'avantage d'une part de rendre compact le dispositif et d'autre part de rendre dépendantes deux commandes que l'on désire coupler. Une des commandes peut par exemple constituer un réglage grossier et l'autre commande un réglage fin.

La figure 4 représente une autre réalisation qui regroupe des dispositions déjà évoquées isolément dans les figures 2 et 3. Les mêmes éléments sont munis des mêmes repères.

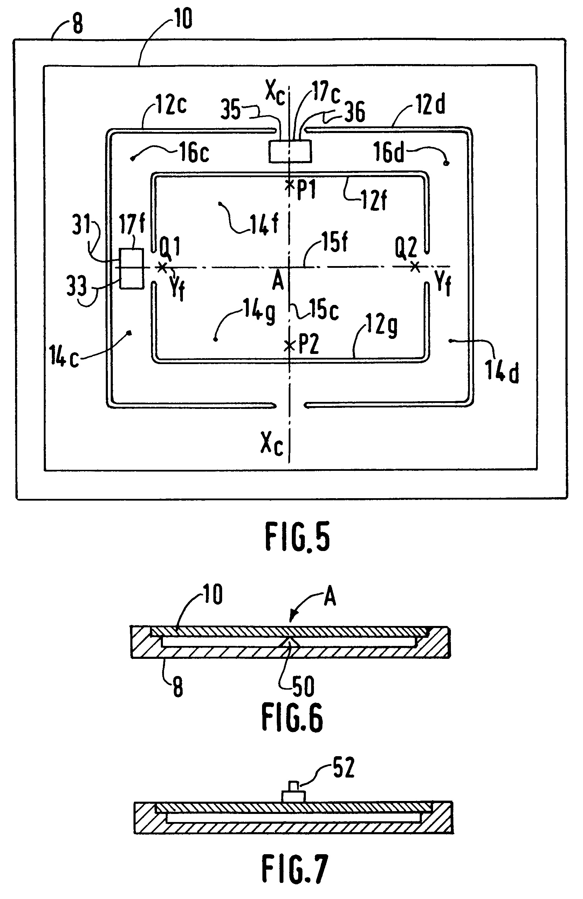

La figure 5 représente un mode préférentiel de réalisation consistant à imbriquer l'une dans l'autre deux dispositions analogues à celle représentée sur la figure 2. Il y a toujours deux fentes 12c, 12d qui enveloppent respectivement deux parties découpées 14c, 14d qui s'inclinent autour d'un axe d'inclinaison Xc - Xc. L'ensemble des deux parties découpées 14c, 14d sert à son tour de support pour réaliser deux fentes additionnelles 12f, 12g qui enveloppent deux parties découpées additionnelles 14f, 14g. Ces dernières ont en commun une attache additionnelle 15f. Une jauge de contrainte additionnelle 17f placée aux environs de l'étranglement situé entre les deux fentes 12f, 12g, fournit des signaux de mesure proportionnels à la force qui est appliquée sur les parties découpées 14f, 14g qui s'inclinent autour d'un axe additionnel Yf - Yf. Pour disposer d'un dispositif opérant selon un principe de cardan, on dispose les fentes pour que les deux axes Xc - Xc et Yf - Yf soient perpendiculaires entre eux. Ainsi une action effectuée en P1 ou en P2 provoque une inclinaison des parties 14f, 14g autour de l'axe Yf - Yf, et une action effectuée en Q1 ou en Q2 provoque une inclinaison des parties 14c, 14d (donc aussi des parties 14f, 14g) autour de l'axe Xc - Xc. En appliquant la force respectivement sur les lignes P1 - P2 et Q1 - Q2 à l'intérieur de la surface délimitée par les fentes 12f, 12g, on dispose de quatre commandes indépendantes proportionnelles ou plus généralement fonction de la force appliquée. A l'extérieur des lignes P1 - P2 et Q1 - Q2 et sur ladite surface, l'action d'une force appliquée provoque une combinaison desdites commandes.

Il est possible de faciliter (figure 6) les inclinaisons autour des axes Xc - Xc et Yf - Yf en disposant un pivot 50 sous la plaque 10 au point de concours A desdits deux axes.

De plus, pour valider les signaux de commandes provoqués par une des inclinaisons, il est possible de disposer un poussoir 52 sur la plaque 10 au point A qui constitue un point neutre pour l'application des forces (figure 7). Les actions du poussoir 52 et du pivot 50 peuvent être combinées.

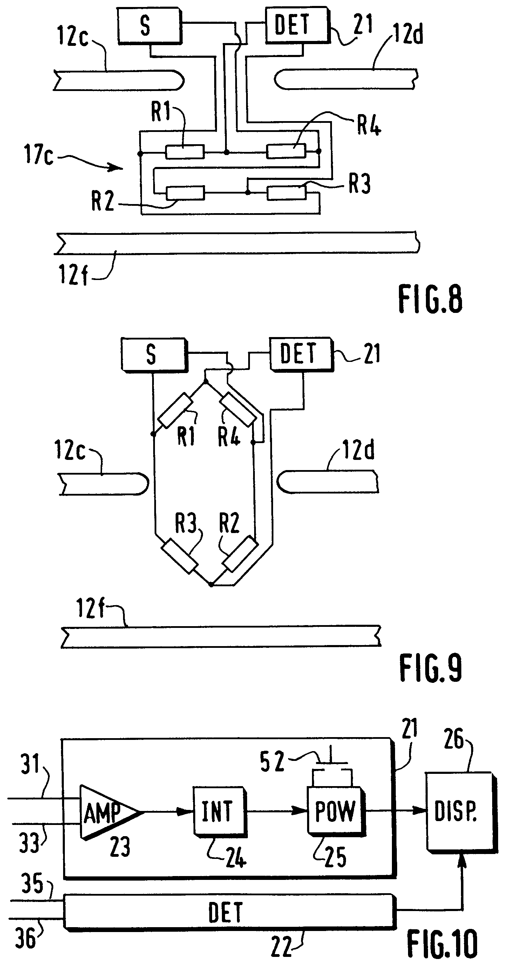

La disposition des jauges de contrainte est exposée plus en détails sur les figures 8 et 9 en prenant exemple sur la réalisation de la figure 5. Les explications sont également valables pour les autres modes de réalisation. Une jauge est constituée de quatre éléments résistifs montés en pont de Wheatstone. La figure 8 représente une disposition du pont qui privilégie une mesure de déformation en flexion. Pour cela, la totalité du pont est disposée dans l'espace compris entre, d'une part, les fentes 12c et 12d et, d'autre part, la fente 12f. Une diagonale du pont est réunie à une source S et un circuit 21 de détection détermine des tensions de déséquilibre du pont et génère le signal de mesure fonction de la flexion de la plaque.

La figure 9 représente une disposition du pont qui privilégie une mesure de déformation par torsion. Pour cela, le pont est réparti de part et d'autre de l'étranglement situé entre les fentes 12c et 12d. D'une manière analogue, un circuit 21 de détection détermine des tensions de déséquilibre du pont et génère un signal de mesure proportionnel à la torsion de la plaque.

Les jauges de contrainte 17c, 17f de la figure 5 sont réunies respectivement à deux circuits 21, 22 de détection représentés sur la figure 10. Les circuits de détection 21 et 22 sont constitués par exemple d'amplificateurs avec filtres basse fréquence (intégrateur), et ils délivrent des signaux de commande aux dispositifs que l'on désire manoeuvrer.

La figure 10 est un exemple de schéma électrique d'un circuit de détection DET placé aux bornes 31, 33 du premier 17c pont résistif. Le dispositif commandé 26 est par exemple un moniteur DISP. La déformation de la plaque entraîne une différence de potentiel entre les bornes 31 et 33 qui est amplifiée par l'amplificateur 23, amortie ou intégrée en passant dans un filtre de basse fréquence par exemple un intégrateur INT 24, enfin un circuit électronique POW de puissance adaptée 25 délivre le signal convenable au dispositif commandé 26. Un second circuit de détection DET 22 analogue au circuit 21 opère de la même manière pour le second 17f pont de jauges de contrainte (figure 5). Le poussoir 52 peut servir à valider les mesures. Pour disposer d'une commande par incrément, l'intégrateur 24 peut totaliser des valeurs d'incrément/décrément.

Le dispositif à commande tactile selon l'invention peut être une télécommande ou être incorporé à un clavier de touches de commandes. L'appareil manoeuvré de cette manière peut être :
- un dispositif électro-mécanique de positionnement délicat : tablette de microscope,
- un variateur de puissance électrique : éclairage, moteur, appareil électrique,
- un engin de levage puissant tel qu'une grue ou un pont roulant...
- un curseur sur une tablette ou sur un écran d'un moniteur d'ordinateur ou de télévision. Dans ce dernier cas, il peut s'agir de sélectionner une fonction ou un objet dans un menu présenté sur l'écran.

Qu'il s'agisse d'une grue ou d'un écran TV, la liaison entre le dispositif de commandes et l'appareil à actionner peut être effectuée soit par une liaison directe par fil ou câble soit par une liaison immatérielle par faisceau infrarouge ou ultrasonore comme cela est fait dans les systèmes de télécommande des appareillages TV ou audio.

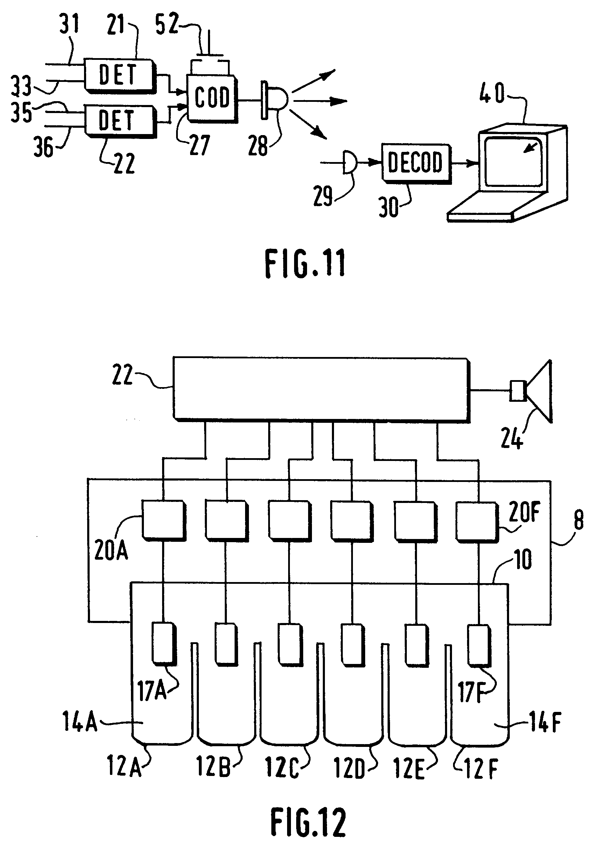

La figure 11 est un exemple relatif à un dispositif de télécommande sans fil de liaison, par exemple à l'aide d'une liaison infrarouge. La différence de tension entre les bornes 31 et 33 (respectivement entre les bornes 35 et 36) est détectée par le circuit de détection 21 (respectivement par le circuit de détection 22). Les sorties des deux circuits de détection 21, 22 sont alors codées par un codeur 27 qui envoie des impulsions de tension ou de courant à la diode émettrice de lumière infrarouge 28. Ces impulsions de lumière sont captées par une diode photosensible 29, identifiées par un circuit décodeur 30 qui adresse à l'appareil commandé 40, par exemple un écran d'ordinateur muni d'un pointeur, des ordres de mouvement ou de positionnement correspondant à l'action mécanique sur le dispositif.

En combinant plusieurs dispositifs à commande tactile déjà décrits, il est possible de réaliser des combinaisons aux possibilités nouvelles et multiples. Ainsi par exemple, on peut combiner une pluralité de dispositifs comme celui de la figure 1 et réaliser un clavier de commandes. Pour cela (figure 12), sur le côté d'une plaque 10, on pratique une série de fentes 12A - 12F qui découpent une suite de parties découpées 14A - 14F disposées côte à côte à la manière d'un clavier de piano. Le support 8 laisse les parties découpées 14A - 14F libres d'être inclinées par rapport à leurs attaches respectives. Chaque partie découpée 14A - 14F possède sa propre jauge de contrainte 17A - 17F. Chaque signal de mesure délivré par chaque jauge est connecté par exemple à un générateur sonore 20A - 20F. Les générateurs sonores sont réunis à un mélangeur 22 qui actionne un organe de transmission 24 par exemple un haut parleur. Un signal délivré par une jauge étant fonction de l'intensité de la force et persistant pendant toute la durée de l'application de cette force, il est possible de réaliser à faible coût ainsi un clavier de musique, par exemple d'orgue. Le clavier peut également être utilisé pour d'autres fonctions par exemple écriture, commandes d'adressage ou autres.

Plus généralement, en combinant plusieurs modes de réalisation décrits, on peut réaliser des boîtiers de commande ou de télécommande pour commander un téléviseur, un magnétoscope, une chaîne Hi-Fi, ou tout appareil similaire.

## Revendications

1. Dispositif à commande tactile comprenant une plaque (10) apte à recevoir une force appliquée (F), au moins une fente (12) qui enveloppe une partie (14) découpée partiellement dans la plaque (10) en conservant une attache (15) avec une partie restante (16) de la plaque (10), des détecteurs (17) à jauge de contrainte pour délivrer des signaux de mesure des déformations de la plaque (10), caractérisé en ce qu'il comprend des moyens (8) pour maintenir ladite partie restante (16) et pour laisser la partie découpée (14) libre pour recevoir une application de la force (F) et permettre ainsi une inclinaison de celle-ci autour de l'attache (15), lesdits signaux de mesure variant en fonction de l'inclinaison de ladite partie découpée (14) par rapport à la partie restante (16).

2. Dispositif selon la revendication 1 caractérisé en ce qu'il comprend au moins deux fentes (12c, 12d) qui enveloppent partiellement respectivement deux parties découpées (14c, 14d) en conservant une attache commune (15) aux deux dites parties découpées et aux parties restantes (16c, 16d), l'attache commune formant un axe d'inclinaison commun (Xc, Xc).

3. Dispositif selon une des revendications 1 ou 2 caractérisé en ce qu'au moins une partie découpée (14a) est elle-même munie d'au moins une fente additionnelle (12b) qui enveloppe partiellement respectivement une partie découpée additionnelle (14b) en conservant une attache additionnelle (15b) avec une partie restante additionnelle (16b) de ladite partie découpée (14a), l'attache additionnelle (15b) formant un axe de basculement additionnel (Xb - Xb) pour ladite partie découpée additionnelle (14b).

4. Dispositif selon la revendication 2 caractérisé en ce que les deux parties découpées (14c, 14d) sont collectivement munies de deux fentes additionnelles (12f, 12g) qui enveloppent partiellement respectivement deux parties découpées additionnelles (14f, 14g) en conservant une attache additionnelle (15f) commune aux deux dites parties découpées additionnelles et aux parties restantes additionnelles (16c, 16d), l'attache additionnelle (15f) commune formant un axe d'inclinaison (Yf - Yf) additionnel commun.

5. Dispositif selon la revendication 4 caractérisé en ce qu'il comprend deux parties découpées (14c, 14d) avec un axe d'inclinaison (Xc - Xc) commun et deux parties découpées additionnelles (14f, 14g) ayant un axe d'inclinaison commun (Yf - Yf), les deux axes étant perpendiculaires.

6. Dispositif selon la revendication 5 caractérisé en ce que la plaque repose sur un pivot (50) au point de concours (A) des deux axes.

7. Dispositif selon une des revendications 1 à 6 caractérisé en ce qu'une au moins des attaches (15a) (15b) (15c) (15c, 15f) est munie d'un poussoir (52) de validation.

8. Clavier caractérisé en ce qu'il comprend une pluralité de touches (14A - 14F), chacune mettant en oeuvre un dispositif selon la revendication 1.
